# EUROPÄISCHE PATENTANMELDUNG

(11) **EP 1 647 470 A1**
(43) Veröffentlichungstag der Anmeldung: **19.04.2006**
(21) Anmeldenummer: 04026880.7
(22) Anmeldetag: 12.11.2004
(51) Int. Cl.: B62D 25/14

(54) **Instrumententafelträgerstruktur zur Aussteifung einer Instrumententafel eines Kraftfahrzeuges**

(30) Priorität: 12.10.2004 EP 04405637
(71) Anmelder: Alcan Technology & Management Ltd., 8212 Neuhausen am Rheinfall (CH)
(72) Erfinder: Bastian, Kay, 78253 Eigeltingen (DE); Zeller, Kuno, 78176 Blumberg (DE); Hein,Jörg, 78256 Steisslingen (DE)

(57) **Zusammenfassung**

Die Erfindung betrifft eine Instrumententafelträgerstruktur (1) zur Aussteifung einer Instrumententafel eines Kraftfahrzeuges, enthaltend einen Querträger (2) aus einem Ein- oder Mehrkammerhohlprofil aus Metall. Die Erfindung zeichnet sich dadurch aus, dass der Querträger (2) durchgängig ausgebildet ist und auf der Fahrerseite eine zusätzliche Verstärkungsstruktur (3) aus einem Metallwalzprodukt angebracht ist, welche mit dem Querträger (2) verschweisst ist.

## Beschreibung

Vorliegende Erfindung betrifft eine Instrumententafelträgerstruktur zur Aussteifung einer Instrumententafel eines Kraftfahrzeuges, enthaltend einen Querträger aus einem Ein- oder Mehrkammerhohlprofil aus Metall.

Instrumententafel-Querträger, nachfolgend vereinfachend Querträger genannt, werden in der Automobilindustrie im Karosseriebau verwendet. Als Teil einer Kraftfahrzeugkarosserie ist der Querträger zwischen den sogenannten A-Säulen, den ersten Säulen in der Seitenwand des Fahrzeuges, die zur Aufnahme einer Vordertüre dienen, mit der Karosserie des Fahrzeuges verbunden. Der Querträger ist im Bereich unterhalb der Windschutzscheibe etwa horizontal verlaufend angeordnet.

Der Querträger ist in der Regel gegen die Stirnwand, also die Trennwand zwischen Motorenraum und Fahrzeuginnenraum, sowie gegen den Fahrzeugboden hin zusätzlich abgestützt.

Der Querträger dient zur Befestigung der Instrumententafel, wobei dem Querträger ausserdem die Aufgabe zukommt, die Instrumententafel auszusteifen. An dem Querträger sind daher Halterungen vorgesehen, an denen die Instrumententafel, ferner eventuell eine Mittelkonsole und die Lenkeinrichtung befestigt werden.

Die Hauptkräfte, wie die Abstützkraft an der Lenkung durch den Fahrer sowie die Gewichtskraft durch die Instrumententafel und die Lenkeinrichtung, werden hauptsächlich im Bereich der Fahrerseite auf den Querträger übertragen, während die Belastungen des Querträgers auf der Beifahrerseite geringer sind.

Die Querträger werden daher üblicherweise mit einem über die Länge des Querträgers ändernden Profilquerschnitt hergestellt, wobei der Profilabschnitt auf der Fahrerseite in der Regel einen grösseren Querschnitt aufweist, als der Profilabschnitt auf der Beifahrerseite.

Durch eine derartige Querschnitts- bzw. Durchmesseränderung kann der Querträger auf die lokal auf einen Profilabschnitt einwirkenden Kräfte ausgelegt werden, was eine Gewichtsoptimierung des Querträgers erlaubt, indem dieser nur an den notwendigen Abschnitten mit einem grösseren bzw. versteifenden Querschnitt verstärkt ist.

Ein weiterer Grund dafür, dass solche Querträger mit nicht konstantem Querschnitt hergestellt werden, liegt darin, dass die Platzverhältnisse in der Instrumententafel in der Regel beengt sind und der Querschnitt daher wo immer möglich klein gehalten werden soll.

Derzeit werden Querträger mit Profilabschnitten unterschiedlichen Querschnitts beispielsweise dadurch hergestellt, das der Profilabschnitt kleineren Querschnitts durch eine Innenhochdruckumformung auf den Querschnitt des Profilabschnitts grösseren Querschnitts aufgeweitet wird. Je nach Profilform der Profilabschnitte, die unterschiedlich sein können, ist ein solches Verfahren, bei dem der Profilabschnitt kleineren Querschnitts auf den Querschnitt des Profilabschnitts grösseren Querschnitts aufgeweitet wird, sehr kosten- und mitunter auch zeitaufwendig.

Eine andere Art eines Verfahrens zur Herstellung eines solchen Querträgers besteht darin, zwei Profilteile unterschiedlichen Querschnitts über ein Verbindungsteil miteinander zu einem Querträger zu fügen. Das Verbindungsteil kann ein Extrusionsteil, Gussteil oder ein Tiefziehteil sein. Ferner können die Profilteile auch überlappend ineinander gesteckt und über geeignete Einschubteile gegeneinander fixiert sein. Die Verwendung mehrerer gegenseitig gefügter Profilteile, weist den Nachteil auf, dass die Fügestellen potentielle Schwachstellen sind, an welchen der Querträger in einem Frontalaufprallereignis als erstes versagt.

Es sind auch Lösungen bekannt, bei welchen die Querträger aus mehreren Teilen, wie Strangpressteilen, Guss- und/oder Blechteilen gefügt sind. Neben einer aufwendigen Montage bilden die Fügestellen auch hier potentielle Schwachstellen aus.

Ferner steht eine solche Mehrkomponenten-Lösung dem Bestreben nach einer Teile-Reduktion im Automobilbau entgegen.

Der Erfindung liegt deshalb die Aufgabe zugrunde, eine Instrumententafelträgerstruktur vorzuschlagen, welche den über die Längserstreckung unterschiedlichen Belastungen Rechnung trägt, biegesteif sowie kostengünstig und mit geringem Zeitaufwand herstellbar ist.

Erfindungsgemäss wird die Aufgabe dadurch gelöst, dass das Hohlprofil durchgängig ausgebildet ist und auf der Fahrerseite eine zusätzliche Verstärkungsstruktur aus einem Metallwalzprodukt angebracht ist, welche mit dem Hohlprofil verbunden ist.

Durchgängig bedeutet hierbei, dass das Hohlprofil von der fahrerseitigen Karosserie-Anbindung (z.B. A-Säule) zur beifahrerseitigen Karosserie-Anbindung (z.B. A-Säule) reicht. Der Querträger ist hierzu vorzugsweise mittels entsprechenden Befestigungsmitteln direkt an die Karosserie oder über zwischen Querträger und Karosserie angeordneten, Verbindungselementen, den sogenannten Seitenhaltern, an die Karosserie angebunden. Der Querträger kann mittels Schrauben, Nieten, Clinchen, Schweissen und/oder Kleben direkt oder indirekt an die Karosserie angebunden sein.

Die Verstärkungsstruktur ist bevorzugt mit dem Querträger verschweisst. Die Verstärkungsstruktur kann mit dem Querträger jedoch auch mittels anderen Fügetechniken, insbesondere mittels Kleben, verbunden sein.

Der Querträger weist bevorzugt einen über die Längserstreckung gleichbleibenden Querschnitt auf. Der Querträger kann einen runden, kreisrunden oder ovalen, oder einen polygonalen, wie drei-, vier-, fünf-, sechs-, sieben- oder achteckigen Querschnitt ausbilden, wobei die Profilseiten querschnittlich bevorzugt gleichmässig ausgebildet sind. Der Querträger kann ferner auch eine Kombination von bogenförmigen und geraden Wandabschnitten unter Ausbildung von Ecken aufweisen. Der Querträger zeichnet sich in einer besonders bevorzugten Ausführung durch wenigstens eine, insbesondere zwei ebene Profilwände aus, an welche die Verstärkungsstruktur angebunden ist.

Der Querträger ist bevorzugt aus Aluminium oder einer Legierung davon. Er kann jedoch auch aus Stahl gefertigt sein. Der Querträger kann aus einem Strangpressprofil oder aus einem Walzprodukt, insbesondere aus Blech gefertigt sein. Der Querträger kann bsp. aus gegenseitig mittels Kalt- oder Warmfügung verbundenen Blechhalbschalen bestehen. Die Blechhalbschalen können bsp. mittels einer Schweissverbindung gefügt sein. Der Querträger kann auch ein Rollformprofil, ein gezogenes Profil oder ein Abkantprofil sein.

Die Verstärkungsstruktur bildet zusammen mit dem Querträger eine Tunnelstruktur aus. Die Verstärkungsstruktur ist stirnseitig jeweils bevorzugt offen gestaltet. Querschnittlich betrachtet bildet der verstärkte Querträger somit wenigstens zwei Kammern aus. Eine erste Kammer wird durch das Querträgerprofil selbst und eine zweite Kammer durch die an das Hohlprofil geschweisste Verstärkungsstruktur gebildet.

Die Verstärkungsstruktur umhüllt bevorzugt wenigstens die Hälfte des Querträger-Umfanges. Die Verstärkungsstruktur kann dem Querträger mit seinen beiden freien Längskanten oder mit seinen die beiden Längskanten beinhaltenden Endabschnittsflächen flächig anliegen. Die Verstärkungsstruktur unter- und übergreift das Querträgerprofil bevorzugt.

Die Verstärkungsstruktur kann querschnittlich polygonal oder von bogenförmiger Gestalt oder eine Kombination davon sein. Die Verstärkungsstruktur ist bevorzugt einstückig ausgebildet.

Die Verstärkungsstruktur ist bevorzugt ein Metallblech aus Aluminium oder einer Legierung davon. Sie kann jedoch auch aus Stahl gefertigt sein. Die Verstärkungsstruktur liegt bevorzugt in Ausführung eines Abkantbleches mit rohr- bzw. kanal- oder rinnenartigem, offenem Querschnitt vor, wobei das Abkantblech mit seinen beiden freien Längskanten bevorzugt längsseitig mit dem Querträger verschweisst ist. Die querschnittliche Öffnung der Verstärkungsstruktur, d.h. die querschnittliche Distanz zwischen den zwei Längskanten der Verstärkungsstruktur ist daher bevorzugt nicht grösser als der maximale Durchmesser des Querträgerprofils.

Das Abkantblech kann ein- oder mehrfach abgekantet sein. Das Verstärkungsblech kann auch gebogen oder in Kombination gebogen und ein- oder mehrfach abgekantet sein. Das Abkanten des Bleches kann bsp. mittels Biegeverfahrens, wie freies Biegen, Gesenkbiegen, Gesenkbiegepressen, Schwenkbiegen oder Rollbiegen, oder mittels Walzprofilieren umgeformt sein. Ferner kann das Verstärkungsblech auch mittels eines Tiefziehverfahrens, Streckziehverfahrens, Fliesspressverfahrens oder mittels Walzrunden hergestellt werden. Kombinationen der vorgenannten Umformverfahren sind denkbar.

In Weiterbildung der Erfindung weist das Abkantblech eine Art C- oder U-förmigen Querschnitt auf.

Die Schweissnaht zwischen Verstärkungsstruktur und Querträger kann durchgängig, abschnittsweise oder punktuell verlaufen. Die Verstärkungsstruktur kann ferner mit ihrer Stirnseite unter Ausbildung eines rechtwinkligen Stosses mittels Schweissverbindung mit dem fahrerseitigen Seitenhalter verbunden sein.

Die Verstärkungsstruktur kann zusätzlich Stege, Rippen oder Flansche sowie Ausnehmungen oder Aussparungen, beispielsweise zur Aufnahme bzw. Anbindung weiterer Elemente, enthalten.

Der Querträger kann überdies Halteelemente zur Anbindung von Funktionselementen enthalten. Der Querträger enthält bevorzugt ein Halteelement zur Festlegung einer Lenkeinrichtung, nachfolgend Lenkeinrichtunghalterung genannt. Ferner kann der Querträger Halteelemente zur Anbindung eines Stützarmes zum Mitteltunnel sowie zur Anbindung von Funktionselementen eines Beifahrer-Airbagsystems, eines Handschuhfaches, eines Knieschutzes oder von Funktionselementen der Innenraumbelüftung und/oder Klimatisierung enthalten.

Die Lenkeinrichtunghalterung ist wenigstens teilweise, vorzugsweise vollständig im mit der Verstärkungsstruktur verstärkten Querträgerabschnitt angeordnet. Die Lenkeinrichtunghalterung weist bevorzugt eine taschen- oder kanalförmige Vertiefung zur Aufnahme des Querträgers auf. Die taschenförmige Vertiefung ist auf die Querschnittsform des mit der Verstärkungsstrukur verstärkten Querträgers ausgelegt. Die taschenförmige Vertiefung enthält eine bodenwärtige Auflagefläche für den Querträger bzw. der Verstärkungsstruktur. Ferner enthält die Lenkeinrichtunghalterung, unter Ausbildung eines in Querträgerrichtung verlaufenden Kanals, bevorzugt eine längslaufende vordere (der Fahrgastzelle zugewandte) und hintere (dem Motorenraum zugewandte) Längswand. Die taschenförmige Vertiefung ist dachwärtig offen und bsp. von U-förmiger Natur. Die Ausgestaltung der taschenförmige Vertiefung entspricht vorzugsweise der Aussenkontur des in diese eingebetteten Querträgerabschnittes. Dieser kommt bevorzugt formschlüssig in der Vertiefung zu liegen.

Die taschenförmige Vertiefung ist in Richtung der fahrerseitigen Karosserie-Anbindung zwecks Austritt des verstärkten Querträgerabschnittes offen. Zur beifahrerseitigen Karosserie-Anbindung hin ist die taschenförmige Vertiefung vorzugsweise durch eine Querwand abgeschlossen und weist lediglich eine kanalartig verlängerte Austrittsöffnung für das (unverstärkte) Querträgerprofil auf. Die Verstärkungsstruktur liegt mit ihrer Stirnseite bevorzugt der genannten Querwand an. Das Verstärkungsprofil untergreift das Querträgerprofil bevorzugt und liegt der Lenkeinrichtunghalterung auf.

Das Querträgerprofil kann mittels Befestigungsmitteln, wie Schrauben oder Nieten, mit der parallel zum Querträgerprofil verlaufenden Wandung der kanalartigen Austrittsöffnung verbunden oder mit dieser verschweisst sein.

Die Lenkeinrichtunghalterung besteht vorzugsweise aus Metall, wie Stahl und vorzugsweise aus Aluminium, Magnesium oder einer Legierung davon. Die Lenkeinrichtunghalterung ist bevorzugt ein Metallgussteil, insbesondere ein Druckgussteil. Die Lenkeinrichtunghalterung kann auch aus Kunststoff, insbesondere faserverstärktem Kunststoff, sein.

Die Lenkeinrichtunghalterung enthält an ihrer hinteren Längswand bevorzugt eine Anschlussstelle zur Anbindung eines Verbindungselementes, der sogenannten Frequenzstrebe, welches die Instrumententafelträgerstruktur mit einem in Frontrichtung vor der Instrumententafelträgerstruktur angeordneten Karosserie-Querträger (Scheibenquerträger) verbindet. Die Anschlussstelle kann eine Anformung mit integrierter Stegstruktur sein. Die Frequenzstrebe ist mit der Lenkeinrichtunghalterung vorzugsweise über Schraubverbindungen verbunden. Die Frequenzstrebe kann auch integraler Bestandteil der Lenkeinrichtunghalterung sein. Ferner kann die Frequenzsstrebe auch über eine Anbindungsstelle an der Verstärkungsstruktur mit der Instrumententafelträgerstruktur verbunden sein.

Die Lenkeinrichtunghalterung weist ferner bevorzugt zwei zueinander beabstandete, lappenförmige, vorzugsweise integrale, Anformungen zur Anbindung eines Stützarmes auf, welcher zur Abstützung des Querträgers zum Mitteltunnel hin dient. Die Anformungen sind bevorzugt zum Fahrzeugboden hin ausgerichtet. Sie sind bevorzugt im beifahrerseitigen Endabschnitt der Lenkeinrichtunghalterung angeordnet.

Zur Anbindung des Stützarmes an die Instrumententafelträgerstruktur ist ein oberer Endabschnitt des Stützarmes unter Ausbildung einer zweischnittigen überlappenden Verbindung zwischen die beiden lappenförmigen Anformungen eingeschoben und gegen diese, vorzugsweise mit Bolzen, fixiert. Der Stützarm ist bevorzugt mit den lappenförmigen Anformungen verschraubt, wobei die Schrauben mit ihrem Schaft sowohl durch die beiden lappenförmigen Anformungen als auch durch den Stützarm geführt sind.

Der Stützarm kann gerade oder abgewinkelt bzw. gebogen ausgebildet sein. Die Ausbildung und die Ausrichtung des Stützarmes hängt unter anderem von den Platzverhältnissen im Bereich der Instrumententafel ab.

Die zweischnittige Festlegung des Stützarmes an die Lenkeinrichtunghalterung ermöglicht eine bessere Kraftübertragung. Die Verbindung ist gegenüber Längs- und Transversalkräften stabiler als bsp. einschnittige Verbindungen oder herkömmliche Schweissverbindungen.

Der Stützarm kann ein- oder mehrteilig sein und besteht bevorzugt aus einem Metallblech. Der Stützarm kann aus Stahl oder aus Aluminium oder einer Legierung davon sein. Der Stützarm ist bevorzugt aus Stahl.

Ist der Stützarm mehrteilig, insbesondere aus zwei Halbschalen, ausgebildet, so sind die einzelnen Blechelemente vorzugsweise miteinander verschweisst. Der Stützarm kann mittels eines Biegeverfahrens, eines Tiefziehverfahrens, Streckziehverfahrens, Fliesspressverfahrens, mittels Walzrunden, Innenhochdruckumformen oder einer Kombination der genannten Verfahren hergestellt bzw. geformt sein.

Die Seitenhalter enthalten bevorzugt eine in Fahrzeuglängsrichtung verlaufende Wand, an welche der Querträger und/oder die Verstärkungsstruktur in einem Winkel, insbesondere in einem rechten Winkel, stösst. Die Seitenhalter sind bevorzugt als Winkelelemente ausgebildet. Die Seitenhalter können aus Blechelementen oder aus Strangpressteilen hergestellt sein.

Die Instrumententafelträgerstruktur findet bevorzugt Anwendung in Kraftfahrzeugen wie Personenkraftwagen (PKW), Kastenwagen, Lieferwagen, Personentransporter, Vans und Kleinbusse.

Im folgenden wird die Erfindung beispielhaft und mit Bezug auf die beiliegenden Zeichnungen näher erläutert. Es zeigen:
- Fig. 1a:: eine perspektivische Ansicht eines erfindungsgemässen Querträgers;
- Fig. 1b:: eine Frontansicht eines erfindungsgemässen Querträgers;
- Fig. 2:: perspektivische Detailansicht einer weiteren Instrumententafelträgerstruktur;
- Fig. 3a-d:: verschiedene Querschnittsformen des Querträgerprofils;
- Fig. 4:: eine schematische Ansicht einer zweischnittigen Verbindung zur Anbindung eines Stützarmes an die Lenkeinrichtunghalterung.

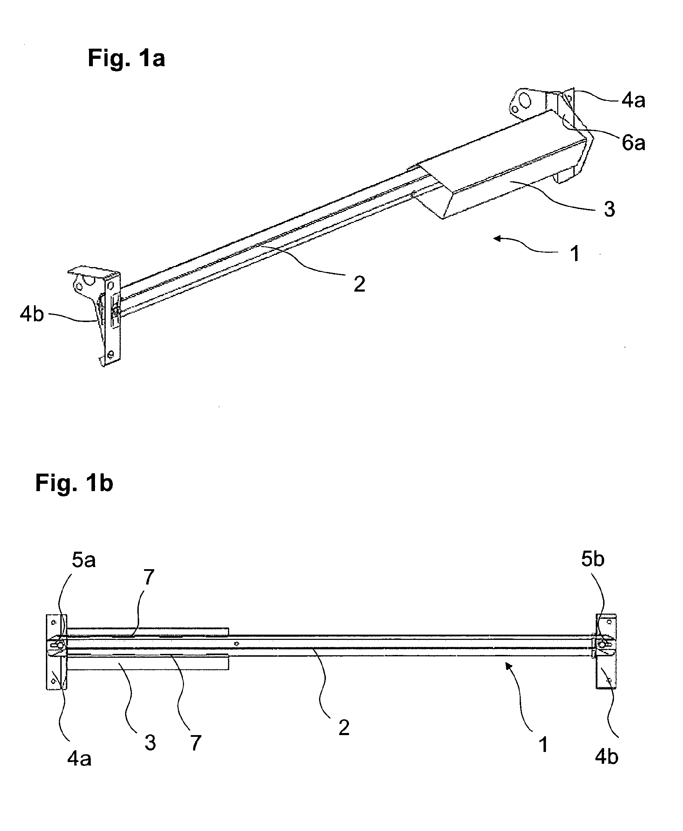

Die erfindungsgemäss fahrerseitig verstärkte Instrumententafelträgerstruktur 1 gemäss Fig. 1a und 1 b zeigt einen durchgehenden Querträger 2 aus einem Hohlprofil, welcher an seinen beiden Endabschnitten mit Seitenhaltern 4a, 4b verbunden ist, welche wiederum an die Fahrzeugkarosserie, insbesondere an die A-Säulen angebunden sind (nicht gezeigt). Der Querträger 2 ist fahrerseitig mittels eines Abkantbleches 3 verstärkt. Das Abkantblech 3 ist hierzu mit seinen längslaufenden Kanten aussenseitig mit der Profilwand des Querträgers 2 unter Ausbildung von Längsschweissnähten 7 verschweisst. Das Abkantblech 3 bildet mit dem Querträger 2 eine Tunnelstruktur aus. Der Querträger 2 ist mit seinen beiden Endabschnitten über Langlochverbindungen 5a, 5b mit den Seitenhaltern 4a, 4b verschraubt.

Der Seitenhalter 4a enthält eine in Fahrzeuglängsrichtung verlaufende Wand 6a, an welche das Abkantblech 3 stirnseitig in einem rechten Winkel stösst. Das Abkantblech 3 ist bevorzugt mit der genannten Wand 6a des Seitenhalters 4a verschweisst (nicht gezeigt).

Die Instrumententafelträgerstruktur 1 kann selbstverständlich, wie im nachfolgenden Ausführungsbeispiel beschrieben, weitere Komponenten wie Lenkeinrichtunghalterung, Frequenzstrebe oder Stützarm enthalten.

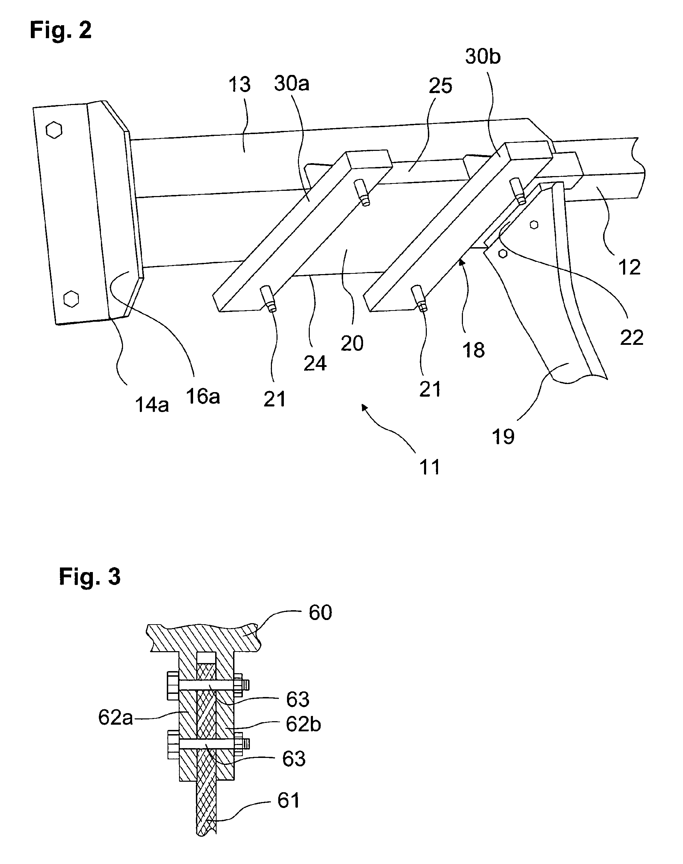

Fig. 2 zeigt eine weitere Ausführungsform einer Instrumententafelträgerstruktur 11. Diese enthält eine Lenkeinrichtunghalterung 18 zur Anbindung einer Lenkeinrichtung, insbesondere einer Lenksäule, (nicht gezeigt) mit integrierter Anbindungsschnittstelle für eine Stützstrebe 19 zum Mitteltunnel.

Die Lenkeinrichtunghalterung 18 weist eine taschenförmige Vertiefung zur Aufnahme der aus dem Verstärkungsblech 13 und dem Querträger 12 gebildeten Querschnittsstruktur. Die taschenförmige Vertiefung ist hierzu auf die Querschnittsform des mit der Verstärkungsstrukur 13 verstärkten Querträgers 12 ausgelegt. Die taschenförmige Vertiefung enthält eine bodenwärtige Auflagefläche 20 für den Querträger 12 sowie eine längslaufende vordere (der Fahrgastzelle zugewandte) und hintere (dem Motorenraum zugewandte) Längswand 25, 24. Die taschenförmige Vertiefung ist dachwärtig offen.

Die taschenförmige Vertiefung entspricht der Aussenkontur des in diese eingeführten Querschnittsstruktur des verstärkten Querträgers 12 und ist U-förmig ausgestaltet, so dass die besagte Querschnittstruktur im wesentlichen formschlüssig in der Vertiefung zu liegen kommt.

Die taschenförmige Vertiefung ist in Richtung der fahrerseitigen A-Säule zwecks Austritt des verstärkten Querträgerabschnittes offen. Zur beifahrerseitigen A-Säule hin ist die taschenförmige Vertiefung vorzugsweise durch eine Querwand abgeschlossen und weist lediglich eine kanalartig verlängerte Austrittsöffnung für das (unverstärkte) Querträgerprofil 12 auf. Die Verstärkungsstruktur liegt bevorzugt stirnseitig der besagten Querwand an (nicht gezeigt).

Die bodenwärtige Auflagefläche Lenkeinrichtunghalterung für den verstärkten Querträger 12 enthält zwei quer, insbesondere im rechten Winkel, zum Querträger verlaufende und zueinander beabstandete Querstreben 30a, 30b. Der verstärkte Querträger 12 stützt sich im wesentlichen auf den beiden Querstreben 30a, 30b ab bzw. liegt diesen auf. Die beiden Querstreben 30a, 30b sind wenigstens über die Längswände 25, 24 miteinander verbunden. Die Querstreben 30a, 30b können zusätzlich über die Bodenfläche 20 miteinander verbunden sein. Zwischen den Querstreben kann jedoch zwecks Gewichtseinsparung auch eine Ausnehmung vorgesehen sein. Die Querstreben 30a, 30b enthalten ferner bodenseitig angeordnete stiftförmige Elemente 21 zur Anbindung der Lenkeinrichtung.

In ihrem beifahrerseitigen Endabschnitt enthält die Lenkeinrichtunghalterung 18 eine Anschlussschnittstelle in der Ausführung einer bodenwärtig ausgerichteten Anformung 22 zur Anbindung eines Stützarmes 19. Der Stützarm 19 dient der Abstützung des Querträgers gegen den in Fahrzeuglängsrichtung verlaufenden Mitteltunnel und übergreift die Anformung 22. Der Stützarm 19 ist über Schraubverbindungen mit der Anformung verbunden.

Die Struktur enthält ferner einen Seitenhalter 14a mit einer in Fahrzeuglängsrichtung verlaufenden Wand 16a, an welche das Abkantblech 13 stirnseitig in einem rechten Winkel stösst. Das Abkantblech 13 ist bevorzugt mit der genannten Wand 16a des Seitenhalters 14a verschweisst (nicht gezeigt).

Die Fig. 3 zeigt eine besondere Ausführungsform zur Anbindung einer Stützstrebe 61 an eine Lenkeinrichtunghalterung 60. Die Anschlussstelle der Lenkeinrichtunghalterung 60 für den Stützarm umfasst zwei lappenförmige Anformungen 62a, 62b auf, zwischen welchen ein Endabschnitt 61 des Stützarmes eingeführt ist. Der Endabschnitt 61 ist mittels zwei sowohl die beiden lappenförmigen Anformungen 62a, 62b als auch den Endabschnitt 61 durchstossenden Schraubverbindungen 63 an die Lenkeinrichtunghalterung 60 angebunden.

Die zweischnittige Festlegung des Stützarmes 61 an die Lenkeinrichtunghalterung 60 ermöglicht eine bessere Kraftübertragung. Die Verbindung ist gegenüber Längs- und Transversalkräften stabiler als bsp. einschnittige Verbindungen.

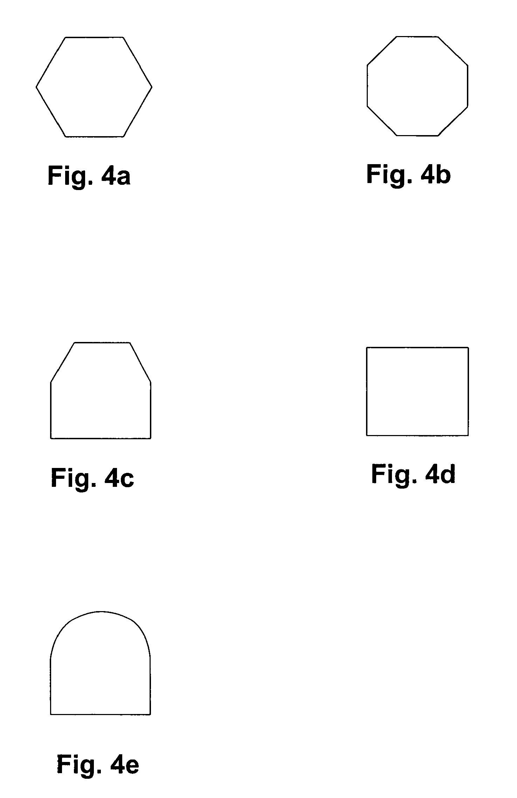

Fig. 4 zeigt eine Auswahl bevorzugter Querschnittsformen des Querträgers. Diese sind sechseckig (Fig. 4a), achteckig (Fig. 4b), ungleichmässig sechseckig (Fig. 4c), quadratisch, rechteckig (Fig. 4d) oder rechteckförmig mit einer teilkreisförmig ausgebildeten Seitenfläche (Fig. 4e). Die besonders bevorzugten Ausführungsvarianten gemäss Fig. 4b-e zeichnen sich durch zwei ebene Profilwände aus, an welche die Verstärkungsstruktur anbindbar ist.

## Patentansprüche

1. Instrumententafelträgerstruktur (1) zur Aussteifung einer Instrumententafel eines Kraftfahrzeuges, enthaltend einen Querträger (2) aus einem Ein- oder Mehrkammerhohlprofil aus Metall,
**dadurch gekennzeichnet, dass**
auf der Fahrerseite eine zusätzliche Verstärkungsstruktur (3) aus einem Metallwalzprodukt am Querträger (2) angebracht und mit diesem verbunden ist.

2. Instrumententafelträgerstruktur nach Anspruch 1, wobei die Verstärkungsstruktur (3) mit dem Querträger (2) verschweisst ist.

3. Instrumententafelträgerstruktur nach einem der Ansprüche 1 bis 2, wobei der Querträger (2) durchgehend von der fahrerseitigen zur beifahrerseitigen Karosseriestruktur ausgebildet ist.

4. Instrumententafelträgerstruktur nach einem der Ansprüche 1 bis 3, wobei die Verstärkungsstruktur (3) mit dem Querträger (2) unter Ausbildung einer Tunnelstruktur verschweisst ist.

5. Instrumententafelträgerstruktur nach einem der Ansprüche 1 bis 4, wobei die Verstärkungsstruktur (3) aus einem Abkantblech besteht.

6. Instrumententafelträgerstruktur nach einem der Ansprüche 1 bis 5, wobei die Verstärkungsstruktur (3) mit der karosserieseitigen Stirnfläche mit einem Seitenhalter (4a) verschweisst ist.

7. Instrumententafelträgerstruktur nach einem der Ansprüche 1 bis 6, enthaltend eine Lenkeinrichtunghalterung (18) zur Anbindung einer Lenkeinrichtung, wobei die Lenkeinrichtunghalterung (18) teilweise oder vollständig im Bereich des mit der Verstärkungsstruktur (13) verstärkten Querträgerabschnittes angeordnet ist und eine taschenförmige Vertiefung mit einer bodenwärtigen Auflagefläche zur Aufnahme des Querträgers (12) aufweist.

8. Instrumententafelträgerstruktur nach Anspruch 7, wobei die taschenförmige Vertiefung der Aussenkontur des in diese eingebetteten Querträgerabschnittes entspricht, so dass dieser formschlüssig in der Vertiefung zu liegen kommt.

9. Instrumententafelträgerstruktur nach einem der Ansprüche 7 bis 8, wobei die Lenkeinrichtunghalterung (60) zwei zueinander beabstandete, lappenförmige Anformungen (62a, 62b) zur Anbindung eines Stützarmes (61) enthält, wobei ein Endabschnitt des Stützarmes (61) unter Ausbildung einer zweischnittigen überlappenden Verbindung zwischen die beiden lappenförmigen Anformungen (62a, 62b) eingeschoben und mittels Befestigungsmitteln (63) mit den Anformungen verbunden ist.

10. Instrumententafelträgerstruktur zur Aussteifung einer Instrumententafel eines Kraftfahrzeuges, enthaltend einen Querträger, eine Lenkeinrichtunghalterung (60) und einen Stützarm (61), welcher den Querträger zur Mittelkonsole hin abstützt.
**dadurch gekennzeichnet, dass**
die Lenkeinrichtunghalterung (60) über Befestigungsmittel mit dem Querträger verbunden ist und zwei zueinander beabstandete, lappenförmige Anformungen (62a, 62b) zur Anbindung des Stützarmes (61) enthält, wobei ein Endabschnitt des Stützarmes (61) unter Ausbildung einer zweischnittigen überlappenden Verbindung zwischen die beiden lappenförmigen Anformungen (62a, 62b) eingeschoben und an diese mittels Befestigungsmitteln fixiert ist.

11. Instrumententafelträgerstruktur nach Anspruch 10, wobei die Befestigungsmittel (63) wenigstens einen, sowohl die lappenförmigen Anformungen (62a, 62b) als auch den Endabschnitt des Stützarmes (61) durchstossenden Bolzen umfassen.

12. Instrumententafelträgerstruktur nach einem der Ansprüche 10 bis 11, wobei die Befestigungsmittel (63) eine Schraubverbindung mit wenigstens einer Schraube ausbilden, und der Schaft der Schraube sowohl durch die beiden lappenförmigen Anformungen (62a, 62b) als auch durch den Stützarm (61) geführt ist.

13. Instrumententafelträgerstruktur nach einem der Ansprüche 10 bis 12, wobei die lappenförmigen Anformungen (62a, 62b) zum Fahrzeugboden hin gerichtet sind.
